(19)

**Europäisches Patentamt**
**European Patent Office**
**Office européen des brevets**

(11) **EP 4 664 360 A1**

(12) **EUROPEAN PATENT APPLICATION**
published in accordance with Art. 153(4) EPC

(43) Date of publication:
**17.12.2025 Bulletin 2025/51**

(21) Application number: **24767465.8**

(22) Date of filing: **11.03.2024**

(51) International Patent Classification (IPC):
$G06N\ 3/0895$ (2023.01)     $G06N\ 3/0464$ (2023.01)
$G06N\ 3/08$ (2023.01)     $G06N\ 3/094$ (2023.01)
$G06N\ 3/0475$ (2023.01)     $G06T\ 7/00$ (2017.01)

(52) Cooperative Patent Classification (CPC):
G06N 3/0464; G06N 3/0475; G06N 3/08;
G06N 3/0895; G06N 3/094; G06T 7/00

(86) International application number:
**PCT/KR2024/003119**

(87) International publication number:
**WO 2024/186178 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 KR 20230030860**

(71) Applicant: **LG Management Development Institute Co., Ltd.**
**Seoul 07336 (KR)**

(72) Inventors:
• **HYUN, Jee Ho**
**Seoul 07573 (KR)**

• **KIM, Sang Yun**
**Gimpo-si, Gyeonggi-do 10113 (KR)**
• **JEON, Gi Young**
**Seoul 08366 (KR)**
• **KIM, Seung Hwan**
**Seongnam-si, Gyeonggi-do 13586 (KR)**
• **BAE, Kyung Hoon**
**Seoul 06597 (KR)**
• **KANG, Byung Jun**
**Yongin-si, Gyeonggi-do 16899 (KR)**

(74) Representative: **BCKIP Part mbB**
**MK1**
**Landsbergerstraße 98, 3.Stock**
**80339 München (DE)**

(54) **PATCH FEATURE LEARNING METHOD FOR ANOMALY DETECTION, AND SYSTEM THEREFOR**

(57) A patch feature learning method and a patch feature learning system for anomaly detection according to an embodiment of the present disclosure perform patch feature-based learning on a predetermined pre-trained model, based on an image data set for an anomaly detection target.

FIG. 5

ACQUIRE FEATURE MAP, BASED ON PRETRAINED MODEL — S101

EXTRACT PLURALITY OF PATCH FEATURES, BASED ON ACQUIRED FEATURE MAP — S103

PERFORM FEATURE REPRESENTATION LEARNING, BASED ON PLURALITY OF EXTRACTED PATCH FEATURES — S105

ACQUIRE RECONPATCH FEATURE ACCORDING TO PERFORMED FEATURE REPRESENTATION LEARNING — S107

PERFORM CORESET SAMPLING, BASED ON ACQUIRED RECONPATCH FEATURE — S109

ACQUIRE TEST SAMPLE IMAGE — S111

ACQUIRE RECONPATCH FEATURE ACCORDING TO ACQUIRED TEST SAMPLE IMAGE — S113

PERFORM ANOMALY DETECTION BASED ON ACQUIRED RECONPATCH FEATURE — S115

EP 4 664 360 A1

**Description**

[Technical Field]

The present disclosure relates to a patch feature learning method and a patch feature learning system for anomaly detection. More specifically, the present disclosure relates to a method and a patch feature learning system for performing patch feature-based learning on a pretrained model, based on an image data set for an anomaly detection target.

[Background Art]

Anomaly detection can refer to a process of identifying abnormal patterns, anomalies, and/or exceptions from given data.

That is, the anomaly detection may be a process of detecting components that deviate from properties of normal data.

For example, systems for realizing this anomaly detection are actively used in various application fields where identifying abnormal patterns is important, such as process monitoring, security intrusion detection, fraud identification, and/or medical diagnosis.

However, when data required for model learning for the anomaly detection is relatively rare or diverse and insufficient, such as when it is difficult to collect abnormal data including a certain defect, when labeled data is limited, or when additional training is required on a large amount of data having no label, there is a problem of limitations on realizing task processing performance for the anomaly detection based on the data.

In addition, in the related art, especially in a vision inspection field, the anomaly detection based on a specific image has been actively performed. However, this image belongs to high-dimensional data. Accordingly, when all data for the entire image is used at once to detect the anomaly, there is a problem that data processing and computation costs are inefficient.

In addition, in most cases, the anomaly is observed as an abnormal pattern appearing in various sizes and shapes in a small portion of the image. According to a method in the related art, there is a problem in that ability for identifying the above-described local pattern on the entire image is very low.

Therefore, there is a need to develop a new technology that can further improve accuracy and efficiency in the anomaly detection even under limited environmental conditions, and that can improve task processing performance accordingly.

[Disclosure]

[Technical Problem]

One embodiment of the present disclosure is to provide a patch feature learning method and a patch feature learning system for anomaly detection, which perform patch feature-based learning on a predetermined pretrained model, based on an image data set for an anomaly detection target.

In this case, one embodiment of the present disclosure is to provide a patch feature learning method and a patch feature learning system for anomaly detection, which perform patch feature-based learning to reduce a variance of mutually similar patch features and to increase a difference in mutually heterogeneous patch features.

However, technical tasks to be achieved by the present disclosure and embodiments of the present disclosure are not limited to the technical tasks described above, and other technical tasks may exist.

[Technical Solution]

As technical means for achieving the above-described technical tasks, according to an embodiment of the present disclosure, there is provided a patch feature learning method for anomaly detection. The method includes a step of acquiring a feature map based on a first image data set, a step of acquiring a plurality of patch features based on local data within a predetermined image, based on the acquired feature map, a step of performing feature representation learning, based on the plurality of acquired patch features, a step of acquiring a ReConPatch feature based on the performed feature representation learning, and a step of performing anomaly detection, based on the acquired ReConPatch feature. The ReConPatch feature is data obtained by reconstructing a feature representation corresponding to the plurality of patch features in accordance with similarity calculated based on the plurality of patch features.

In another aspect, the patch feature may be a feature extracted from a patch that specifies at least a partial region within the predetermined image.

In another aspect, the step of acquiring the plurality of patch features may include any one step from a step of acquiring a plurality of patches according to a predetermined patch size, based on a first image included in the first image data set and extracting a feature for each of the plurality of acquired patches, and a step of extracting a feature for the entire first image included in the first image data set and dividing all of the extracted features into a predetermined patch size.

In another aspect, the step of performing the feature representation learning, based on the plurality of patch features, may include a step of performing semi-supervised concept learning.

In another aspect, the step of performing the feature representation learning, based on the plurality of patch features, may include a step of performing the learning, based on a first network, which is a neural network for calculating similarity between predetermined features, and a second network, which is a neural network for realizing feature representation learning.

In another aspect, the first network and the second network may each include a feature representation layer, which is a layer for reconstructing feature representation according to a predetermined feature, and a space projection layer, which is a layer for projecting feature representation according to a predetermined feature into a feature representation space.

In another aspect, the step of performing the feature representation learning, based on the plurality of patch features, may further include a step of gradually distilling data according to a parameter of the second network into data according to a parameter of the first network, based on an exponential moving average algorithm.

In another aspect, the step of performing the feature representation learning, based on the plurality of patch features, may further include a step of projecting a first patch feature pair including a predetermined first patch feature and a predetermined second patch feature into the feature representation space, and a step of calculating pairwise similarity, which is data obtained by measuring similarity between the first patch feature and the second patch feature, based on the first patch feature pair projected into the feature representation space.

In another aspect, the step of performing the feature representation learning, based on the plurality of patch features, may further include a step of calculating contextual similarity, which is data obtained by measuring bidirectional similarity between the K-number of nearest neighbors for the first patch feature and the K-number of nearest neighbors for the second patch feature, based on the first patch feature pair projected into the feature representation space.

In another aspect, the step of performing the feature representation learning, based on the plurality of patch features, may further include a step of calculating integrated similarity, which is data obtained by linearly combining the calculated pairwise similarity and the contextual similarity.

In another aspect, the step of performing the feature representation learning, based on the plurality of patch features, may further include a step of training the second network, based on the calculated integrated similarity.

In another aspect, the step of training the second network, based on the integrated similarity, may include a step of training the second feature representation layer for mapping the first patch feature and the second patch feature to be separated or closer to each other on the feature representation space according to the integrated similarity.

In another aspect, the step of performing the anomaly detection may include a step of acquiring a first test sample image, a step of acquiring the ReConPatch feature according to the acquired first test sample image, and a step of performing the anomaly detection, based on the ReConPatch feature according to the feature representation learning and the ReConPatch feature according to the first test sample image.

In another aspect, the step of performing the anomaly detection may further include a step of generating an anomaly score map, based on the similarity between the ReConPatch feature according to the feature representation learning and the ReConPatch feature according to the first test sample image, and a step of performing the anomaly detection, based on the generated anomaly score map.

In another aspect, according to an embodiment of the present disclosure, the patch feature learning method for anomaly detection may further include a step of performing coreset sampling on the ReConPatch feature according to the feature representation learning, and a step of performing the anomaly detection, based on the ReConPatch feature on which the coreset sampling is performed.

Meanwhile, according to an embodiment of the present disclosure, there is provided a patch feature learning system for anomaly detection. The system includes at least one the memory, and at least one processor for reading out at least one application stored in the memory to perform patch feature learning for the anomaly detection. The processor acquires a feature map according to ae first image data set, acquires a plurality of patch features based on local data within a predetermined image, based on the acquired feature map, performs feature representation learning, based on the plurality of acquired patch features, acquires a ReConPatch feature, which is data obtained by reconstructing feature representation according to the plurality of patch features, in accordance with similarity calculated based on the plurality of patch features, in accordance with the performed feature representation learning, and performs the anomaly detection, based on the acquired ReConPatch feature.

Meanwhile, according to an embodiment of the present disclosure, there is provided a computing device including at least one the memory, and at least one processor for reading out at least one application stored in the memory to perform patch feature learning for anomaly detection. Commands of the processor include commands for executing a step of acquiring a feature map according to a first image data set, a step of acquiring a plurality of patch features based on local data within a predetermined image, based on the acquired feature map, a step of performing feature representation learning, based on the plurality of acquired patch features, a step of acquiring a ReConPatch feature, which is data obtained by reconstructing feature representation according to the plurality of patch features in accordance with similarity calculated based on the plurality of patch features, in accordance with the performed feature representation learning, and a step of performing anomaly detection, based on the acquired ReConPatch feature.

[Advantageous Effects]

According to an embodiment of the present disclosure, a patch feature learning method and a patch feature learning system for anomaly detection performs patch feature-based learning on a predetermined pretrained model, based on an image data set for an anomaly detection target. In this manner, there is an advantageous effect of performing more efficient data processing and providing an anomaly detection model that further improves task processing performance and quality for the anomaly detection.

In addition, according to an embodiment of the present disclosure, the patch feature learning method and the patch feature learning system for the anomaly detection performs the patch feature-based learning to reduce a variance of mutually similar patch features and to increase a difference in mutually heterogeneous patch features. In this manner, there is an advantageous effect of improving accuracy and efficiency of the anomaly detection even in a limited learning environment and enhancing task processing performance accordingly.

However, the advantageous effects achieved by the present disclosure are not limited to the advantageous effects described above, and other advantageous effects that are not described above can be clearly understood from the description below.

[Description of Drawings]

FIG. 1 illustrates an example of a block diagram of a computing system for realizing a patch feature training service for anomaly detection according to one embodiment of the present disclosure.
FIG. 2 illustrates an example of a block diagram of a computing device for realizing the patch feature training service for anomaly detection according to one embodiment of the present disclosure.
FIG. 3 illustrates an example of a block diagram in another aspect of the computing device for realizing the patch feature training service for anomaly detection according to one embodiment of the present disclosure.
FIG. 4 is an example of a block flow diagram for describing an anomaly detection model according to one embodiment of the present disclosure.
FIG. 5 is a flowchart for describing a patch feature learning method for anomaly detection according to an embodiment of the present disclosure.
FIG. 6 is a flowchart for describing a feature representation learning method based on a patch feature according to one embodiment of the present disclosure.
FIG. 7 is an example of a diagram illustrating an example of measuring similarity between patch features according to one embodiment of the present disclosure.
FIG. 8 is an example of a diagram illustrating an application example of a ReConPatch Process according to one embodiment of the present disclosure.

[Mode for Invention]

The present disclosure may be modified in various ways, and may have various embodiments. Therefore, specific embodiments will be illustrated in the drawings, and will be described in detail in the detailed description. Advantageous effects and features of the present disclosure as well as methods for achieving the advantageous effects and the features of the present disclosure will become clear with reference to an embodiments described in detail below along with the drawings. However, the present disclosure is not limited to an embodiments disclosed below, and may be implemented in various forms. In the following embodiments, terms such as "first" and "second" are not used in a limiting sense, and are used to distinguish one component from another component. In addition, singular expressions include plural expressions unless the context clearly indicates otherwise. Furthermore, terms such as "including" and "having" indicate the presence of a feature or a component described in the specification, and do not preclude a possibility of adding one or more other features or components. In addition, for convenience of description, sizes of the components in the drawings may be exaggerated or reduced. For example, for convenience of description, a size and a thickness of each component illustrated in the drawings are illustrated in any desired way. Therefore, the present disclosure is not necessarily limited to illustrated examples.

Hereinafter, embodiments of the present disclosure will be described in detail with reference to the accompanying drawings. When the embodiments are described with reference to the drawings, the same reference numerals will be assigned to the same or corresponding components, and repeated description thereof will be omitted.

[Exemplary System Providing Patch Feature Training Service for Anomaly Detection]

Hereinafter, an exemplary system for realizing a patch feature training service for anomaly detection, which performs patch feature-based learning on a predetermined pretrained model, based on an image data set for an anomaly detection target, will be described in detail with reference to the accompanying drawings.

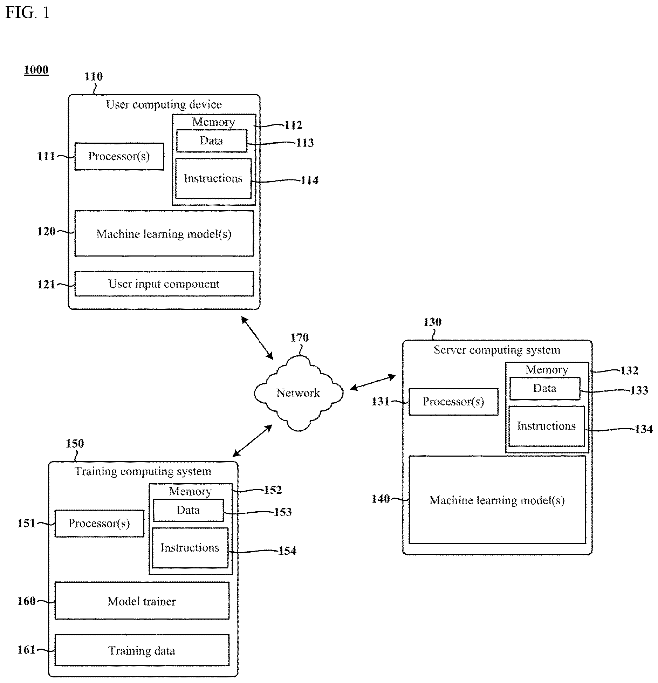

FIG. 1 illustrates an example of a block diagram of a computing system for realizing the patch feature training service for anomaly detection according to one embodiment of the present disclosure.

Referring to FIG. 1, a computing system 1000 for realizing the patch feature training service for anomaly detection of the present disclosure includes a user computing device 110, a server computing system 130, and a training computing system 150, and the devices may communicate with each other via a network 170.

A patch feature learning method for anomaly detection according to an embodiment of the present disclosure may be 1) implemented and provided locally by the user computing device 110, 2) implemented and provided in a form of a web service by the server computing system 130 communicating with the user computing device 110, or 3) implemented and provided by the user computing device 110 and the server computing system 130 in conjunction with each other.

In this case, in the embodiment, the user computing device 110 and/or the server computing system 130 may train a machine learning model (120 and/or 140) through interaction with the training computing system 150 which is communicatively connected via the network 170. The training computing system 150 may be separate from the server computing system 130, or may be a part of the server computing system 130.

In this case, an artificial intelligence model (in the embodiment, an anomaly detection model or the like) may be 1) trained locally and directly by the user computing device 110, may be 2) trained in such a manner that the server computing system 130 and the user computing device 110 interact with each other through the network 170, and may be 3) trained in such a manner that a separate training computing system 150 uses various training techniques and learning techniques. The artificial intelligence model trained by the training computing system 150 may be implemented in such a manner that the artificial intelligence model is transmitted to, provided for, and updated by the user computing device 110 and/or the server computing system 130 through the network 170.

In some embodiments, the training computing system 150 may be a part of the server computing system 130, or may be a part of the user computing device 110.

The user computing device 110 may include any type of computing devices, such as a smart phone, a mobile phone, a digital broadcasting device, a personal digital assistant (PDA), a portable multimedia player (PMP), a desktop, a wearable device, an embedded computing device and/or a tablet PC.

This user computing device 110 includes at least one processor 111 and a memory 112. Here, the processor 111 may be configured to include at least one or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors and/or other electrical units for performing functions.

The memory 112 may include one or more non-transitory/transitory computer-readable storage media, such as a RAM, a ROM, an EEPROM, an EPROM, a flash memory device, and a magnetic disk, and a combinations thereof, and may include a web storage of a server that performs a storage function of the memory on the Internet. The memory 112 may store data 113 and commands 114 which are required for at least one of the processors 111 to perform functional operations, such as training an artificial intelligence model or performing the anomaly detection through the artificial intelligence model.

In one embodiment, the user computing device 110 may store at least one machine learning model 120.

In detail, the machine learning model 120 may be various machine learning models, such as a plurality of neural networks (for example, a deep neural network), or other types of machine learning models including a non-linear model and/or a linear model, and may be configured to include a combination thereof.

In this case, the neural network may include at least one of feed-forward neural networks, recurrent neural networks (for example, long short-term memory recurrent neural networks), convolutional neural networks, and/or other types of neural networks.

In one embodiment, the user computing device 110 may receive at least one machine learning model 120 from the server computing system 130 via the network 170, may store the machine learning model 120 in the memory 112, and thereafter, may cause the processor 111 to execute the stored machine learning model 120 to perform the anomaly detection.

In another embodiment, the server computing system 130 may include at least one machine learning model 140, may perform an operation using the machine learning model 140, and may provide a patch feature training service for the anomaly detection to a user by using a method of communicating related data with the user computing device 110 in conjunction with the user computing device 110.

For example, the user computing device 110 may perform the patch feature training service for the anomaly detection in such a manner that the server computing system 130 provides an output for a user's input by using the machine learning model 140 via the web.

In addition, the artificial intelligence model may also be implemented in such a manner that at least some of the machine learning models (120 and/or 140) are executed by the user computing device 110 and the remaining learning models are executed by the server computing system 130.

In addition, the user computing device 110 may include at least one input component 121 that detects a user's input. For example, the user input component 121 may include a touch sensor (for example, a touch screen and/or a touch pad) that detects a touch of a user's input medium (for example, a finger or a stylus), an image sensor that detects a user's motion input, a microphone that detects a user's voice input, a button, a mouse, and/or a keyboard. In addition, the user input component 121 may include an interface and an external controller when receiving an input for an external controller (for example, a mouse and/or a keyboard) through an interface.

The server computing system 130 includes at least one processor 131 and the memory 132. Here, the processor 131 may be configured to include at least one or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors and/or other electrical units for performing functions.

The memory 132 may include one or more non-transitory/transitory computer-readable storage media, such as a RAM, a ROM, an EEPROM, an EPROM, a flash memory device, a magnetic disk, and a combination thereof. The memory 132 may store data 133 and commands 134 which are required for the processor 131 to perform functional operations, such as training the artificial intelligence model or performing the anomaly detection through the artificial intelligence model.

In one embodiment, the server computing system 130 may be implemented to include at least one computing device. For example, the server computing system 130 may be implemented to operate a plurality of computing devices in accordance with a sequential computing architecture, a parallel computing architecture, or a combination thereof. In addition, the server computing system 130 may include the plurality of computing devices connected via the network 170.

In addition, the server computing system 130 may store at least one machine learning model 140. For example, the server computing system 130 may include a neural network and/or other multi-layer non-linear models as the machine learning model 140. An exemplary neural network may include feedforward neural networks, deep neural networks, recurrent neural networks, and convolutional neural networks.

The training computing system 150 includes at least one processor 151 and a memory 152. Here, the processor 151 may be configured to include at least one or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors and/or other electrical units for performing functions.

The memory 152 may include one or more non-transitory/transitory computer-readable storage media, such as a RAM, a ROM, an EEPROM, an EPROM, a flash memory device, a magnetic disk, and a combination thereof. The memory 152 may store data 153 and commands 154 which are required for the processor 151 to perform learning of the artificial intelligence model.

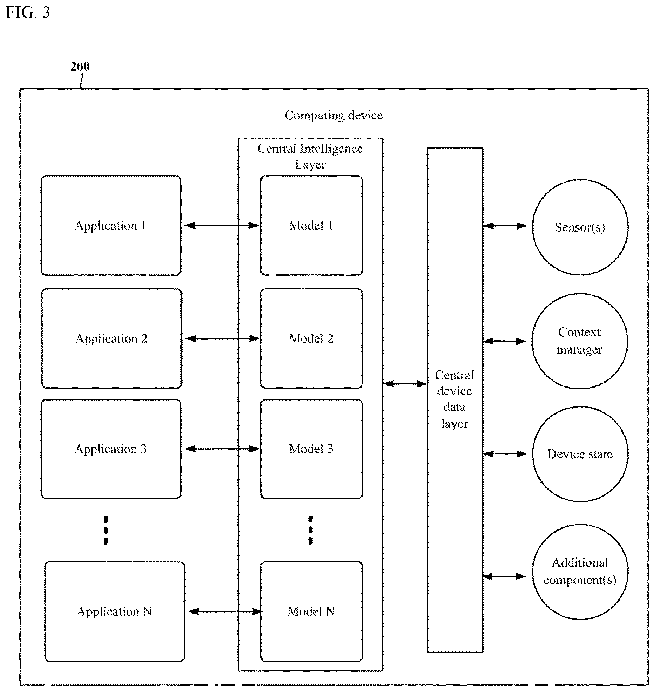

For example, the training computing system 150 may include a model trainer 160 that trains the machine learning model (120 and/or 140) stored in the user computing device 110 and/or the server computing system 130 by using various training or learning techniques, such as backpropagation of errors (according to a framework illustrated in FIG. 3).

As an example, this model trainer 160 may update one or more parameters of the machine learning model (120 and/or 140) by using a method of the backpropagation, based on a defined loss function.

In some implementation examples, performing the backpropagation of errors may include performing truncated backpropagation through time. The model trainer 160 may perform a number of generalization techniques (for example, weight reduction, dropout, and/or knowledge distillation) to improve generalization ability of the trained machine learning model (120 and/or 140).

In particular, the model trainer 160 may train the machine learning model (120 and/or 140), based on a series of training data 161. Here, for example, the training data 161 may include data in different formats, such as images, audio samples, and/or text. Examples of image types that can be used include a video frame, a LiDAR point cloud, an X-ray image, computed tomography scan, a hyperspectral image, and/or various other forms of images.

This training data 161 may be provided by the user computing device 110 and/or the server computing system 130. When the training computing device trains the machine learning model (120 and/or 140) on specific data of the user computing device 110, the machine learning model (120 and/or 140) may be characterized as a personalized model.

The Model Trainer 160 includes a computer logic utilized to provide a desired function.

In addition, the model trainer 160 may be implemented as hardware, firmware, and/or software, which control a general-purpose processor. In one implementation, the model trainer 160 may include a program file stored in a storage device, may be loaded into the memory 152, and may be executed by one or more of the processors 151. In another implementation example, the model trainer 160 includes one or more sets of computer-executable data 153 and the commands 154 which are stored in a tangible computer-readable storage medium, such as a RAM hard disk or an optical or magnetic medium.

The network 170 includes the 3rd Generation Partnership Project (3GPP) network, the Long Term Evolution (LTE) network, the World Interoperability for Microwave Access (WIMAX) network, the Internet, the Local Area Network (LAN), the Wireless Local Area Network (LAN), the Wide Area Network (WAN), the Personal Area Network (PAN), the Bluetooth network, the satellite broadcasting network, the analog broadcasting network, and/or the Digital Multimedia Broadcasting (DMB) network, but the present disclosure is not limited thereto.

In general, communication over the network 170 may be performed by using any type of wired and/or wireless connection, through various communication protocols (for example, TCP/IP, HTTP, SMTP, and/or FTP), encodings or formats (for example, HTML and/or XML), and/or protection schemes (for example, VPN, Secure HTTP, and/or SSL).

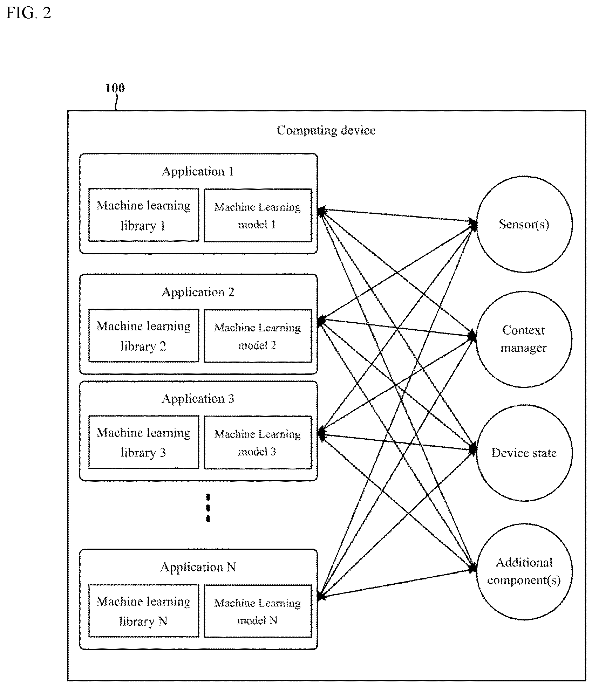

FIG. 2 illustrates an example of a block diagram of a computing device for realizing the patch feature training service for anomaly detection according to one embodiment of the present disclosure.

As illustrated in FIG. 2, the computing device 100 included in the user computing device 110, the server computing system 130, and the training computing system 150 includes multiple applications (for example, Application 1 to Application N). Each application may include a machine learning library and one or more machine learning models. For example, the applications may include an image processing (for example, detection, classification, and/or segmentation) application, a text messaging application, an email application, a dictation application, a virtual keyboard application, a browser application, and/or a chat-bot application.

In an embodiment, the computing device 100 may include the model trainer 160 for training the artificial intelligence model, and may store and operate the trained artificial intelligence model to provide output data according to predetermined input data (as an embodiment, image data or the like).

For example, each application of the computing device 100 may communicate with other multiple components of the computing device 100, such as at least one sensor, a context manager, a device state component, and/or additional components. In one embodiment, each application may communicate with each device component by using an API (for example, a public API). In one embodiment, the API used by each application may be specific to the corresponding application.

FIG. 3 illustrates an example of a block diagram in another aspect of the computing device 100 for realizing the patch feature training service for anomaly detection according to one embodiment of the present disclosure.

Referring to FIG. 3, the computing device 300 includes multiple applications (for example, Application 1 to Application N). Each application may communicate with a central intelligence layer. For example, the applications may include an image processing application, a text messaging application, an email application, a dictation application, a virtual keyboard application, and/or a browser application. In one embodiment, each application may communicate with the central intelligence layer (and an internally stored model) by using an API (for example, a common API across all applications).

The central intelligence layer may include multiple machine learning models. For example, as illustrated in FIG. 3, at least some of the respective machine learning models may be provided to each application, and may be managed by the central intelligence layer. In another implementation example, two or more applications may share a single machine learning model. For example, in some implementation examples, the central intelligence layer may provide a single model to all applications. In some implementation examples, the central intelligence layer may be included within an operating system of the computing device 300, or may be differently implemented.

The central intelligence layer may communicate with a central device data layer. The central device data layer may be a centralized data repository for the computing device 300. As illustrated in FIG. 3, for example, the central device data layer may communicate with other multiple components of the computing device 300, such as one or more sensors, a context manager, a device state component, and/or additional components. In some implementation examples, the central device data layer may communicate with each device component by using an API (for example, a private API).

The techniques described herein may refer to servers, databases, software applications, and other computer-based systems, as well as taken actions and information transmitted to or from the systems. It will be appreciated that inherent flexibility of the computer-based systems allows a wide range of possible configurations, combinations, task division, and functionality between and from components. For example, the processes described herein may be implemented by using a single device or component, or multiple devices or components operated in combination. Databases and applications may be implemented in a single system or in a system distributed across multiple systems. Distributed components may be sequentially operated, or may be operated in parallel.

[Anomaly Detection Model (ODM)]

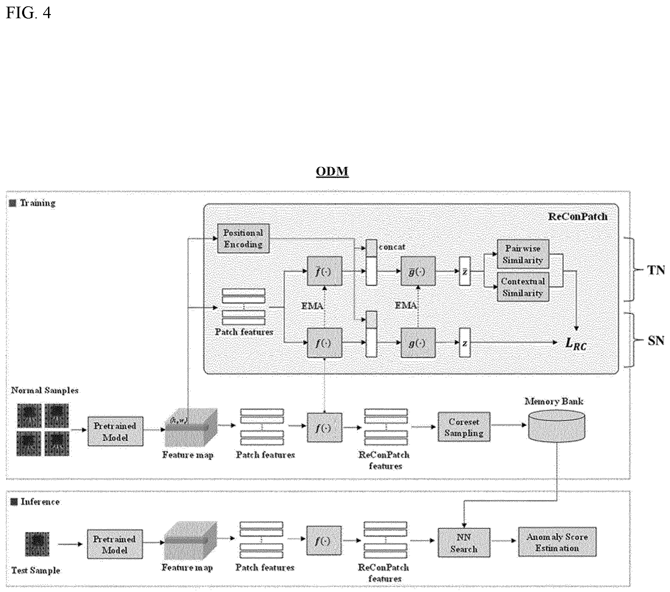

FIG. 4 is an example of a block flow diagram for describing an anomaly detection model (ODM) according to one embodiment of the present disclosure.

Referring to FIG. 4, the anomaly detection model (ODM) according to an embodiment of the present disclosure may mean an image deep-learning model that performs anomaly detection based on a predetermined input image and classifies and/or recognizes the image, based on the anomaly detection.

Here, for reference, the anomaly detection may mean a process of identifying abnormal patterns, anomalies, and/or exceptions from specific data.

That is, the anomaly detection may be a process of detecting components that deviate from attributes of normal data.

As an embodiment, the anomaly detection may be implemented, based on a method of grouping predetermined data into clusters and considering points that deviate from the clusters as anomalies.

Therefore, in an embodiment, the anomaly detection model (ODM) may determine whether a predetermined input image includes a specific abnormal attribute, and may classify and/or recognize the image, in accordance with a determination result.

In detail, in an embodiment, the anomaly detection model (ODM) may include a first network (TN: Teacher Network) and a second network (SN: Student Network).

More specifically, the first network TN according to an embodiment may mean a neural network that calculates similarity between predetermined features (in the embodiment, the patch features).

In an embodiment, this first network TN may include a first feature representation layer $\bar{f}(\cdot)$ and a first space projection layer $\bar{g}(\cdot)$.

Here, a feature representation layer according to an embodiment may mean a layer that reconstructs (adjusts) the feature to improve performance of feature representation according to a predetermined feature (in the embodiment, the patch feature).

For this purpose, the feature representation layer may be trained to highly accurately extract a meaningful feature from the predetermined feature (in the embodiment, the patch feature) and to reconstruct (adjust) the feature, based on the extracted meaningful feature.

In addition, a space projection layer according to an embodiment may mean a layer that projects the feature representation according to the predetermined feature (in the embodiment, the patch feature) into a predetermined feature representation space.

In an embodiment, this space projection layer may be trained to project the feature representation according to the predetermined feature (in an embodiment, the patch feature) into the feature representation space to which a goal of model learning may be more effectively applied.

Meanwhile, the second network SN according to an embodiment may mean a neural network that implements feature representation learning.

For reference, the feature representation learning may mean a process in which a deep-learning model automatically detects and learns a useful feature from given data.

Through the feature representation learning, the deep-learning model may effectively encode useful information included in data to generate a meaningful feature that may be used in various deep-learning tasks, may understand complex structures and pattern of data, and may more accurately perform prediction, based on this understanding.

In an embodiment, the second network SN implementing the feature representation learning as described above may include a second feature representation layer $\bar{f}(\cdot)$ and a second space projection layer $\bar{g}(\cdot)$.

In this case, the first feature representation layer $\bar{f}(\cdot)$ and the second feature representation layer $\bar{f}(\cdot)$ according to an embodiment and the first space projection layer $\bar{g}(\cdot)$ and the second space projection layer $\bar{g}(\cdot)$ are intended to distinguish and describe the feature representation layer and the space projection layer which are included in the first network TN and the feature representation layer and the space projection layer which are included in the second network SN. Therefore), the description of the feature representation layer and the space projection layer of the second network SN applies to the description of the feature representation layer and the space projection layer of the first network TN described above.

In addition, the first network TN and the second network SN according to an embodiment will be described in more detail in the following patch feature learning method for anomaly.

Meanwhile, in the embodiment, the anomaly detection model (ODM) may perform various functional operations required for the patch feature training service for anomaly detection in conjunction with a pretrained model (hereinafter, a pretrained model) to perform concept learning.

Here, the pretrained model according to an embodiment may be an image deep-learning model pretrained to perform the concept learning, based on a predetermined training data set (for example, a predetermined natural image data set and/or a predetermined normal image data set).

For reference, the concept learning may mean a process of inferring general rules, concepts, or patterns from given data and classifying results.

That is, in the embodiment, the pretrained model may be an image deep-learning model that uses a predetermined image as input data, that learns common features of objects or patterns in the input image, that groups image components having similar features, based on the common features, and that supports classifying or recognizing a specific image, based on a grouping result.

Specifically, the pretrained model may 1) extract a feature map for a predetermined input image.

In detail, the pretrained model may automatically extract the feature map based on raw pixel data of the input image by using a predetermined image deep-learning neural network (for example, a convolutional neural network (CNN)).

This feature map may represent various visual attributes of the image, such as edges, colors, and/or textures.

In addition, the pretrained model may perform 2) clustering based on a feature space.

In detail, the pretrained model may classify the input image and/or an object within the input image into groups having similar features, based on the feature map extracted as described above.

As an embodiment, the pretrained model may classify the extracted feature map according to the feature space by using a predetermined clustering algorithm (for example, K-means, DBSCAN, and/or a hierarchical clustering algorithm) or a dimensionality reduction algorithm (for example, t-SNE and/or UMAP).

In addition, the pretrained model may 3) assign a label to each cluster.

In other words, the pretrained model may define a concept (hypothesis) representing each cluster, and may set the concept as a label for the cluster.

In this case, the pretrained model may learn features of images belonging to a specific concept or category by manually or semi-automatically assigning the label for each cluster.

In addition, the pretrained model may 4) verify and adjust the assigned hypothesis.

In detail, the pretrained model may verify the concept (clustered feature group) initially defined as described above, and may adjust the corresponding hypothesis when necessary.

In this case, the pretrained model may perform a process of detecting and improving incorrectly clustered data by using new image data.

In addition, the pretrained model may 5) repeatedly perform the above-described process.

That is, the pretrained model may be trained to continuously improve the clustered feature-related concept through new image data and additional feedback, and to more accurately classify or recognize the images.

In this case, the pretrained model may be directly included in the anomaly detection model (ODM), or may be implemented as a separate device and/or server from the anomaly detection model (ODM).

In the following description, an example in which the pretrained model is implemented as a part of the anomaly detection model (ODM) will be described, but the present disclosure is not limited thereto.

In addition, in FIG. 4, an example in which the anomaly detection model (ODM) includes the above-described components to prevent obscurity of the features according to an embodiment of the present disclosure will be described. However, depending on an embodiment, it is apparent to those skilled in the art can understand that other general components may be further included in addition to the components illustrated in FIG. 4 or that some of the components illustrated in FIG. 4 may be omitted.

[Patch Feature Learning Method for Anomaly Detection]

Hereinafter, a method for implementing the patch feature training service for anomaly detection, which performs patch feature-based learning on a predetermined pretrained model, based on an image data set for an anomaly detection target, according to an embodiment of the present disclosure, will be described in detail.

The patch feature learning method for anomaly detection of the computing system 1000 according to an embodiment of the present disclosure may improve performance and quality of various anomaly detection-based services by using the anomaly detection model (ODM) trained according to an embodiment of the present disclosure.

In this case, the patch feature learning method for anomaly detection of the computing system 1000 according to an embodiment of the present disclosure may effectively provide the anomaly detection model (ODM) having improved performance by performing the patch feature-based learning that reduces mutually similar patch features and to increase a difference in mutually heterogeneous patch features.

Hereinafter, the patch feature learning method for anomaly detection according to an embodiment of the present disclosure will be described in more detail with reference to the accompanying drawings.

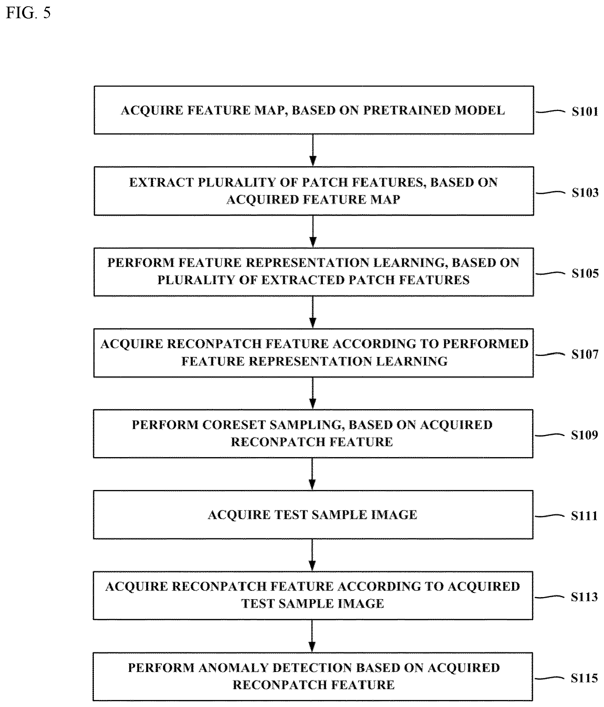

FIG. 5 is a flowchart for describing the patch feature learning method for anomaly detection according to an embodiment of the present disclosure.

Referring to FIGS. 4 and 5, the patch feature learning method for anomaly detection according to an embodiment of the present disclosure includes a step (S101) of acquiring the feature map, based on the pretrained model, a step (S103) of extracting a plurality of patch features, based on the acquired feature map, a step (S105) of performing the feature representation learning, based on the plurality of extracted patch features, a step (S107) of acquiring the ReConPatch feature according to the performed feature representation learning, a step (S109) of performing coreset sampling, based on the acquired ReConPatch feature, a step (S111) of acquiring a test sample image, a step (S113) of acquiring the ReConPatch feature according to the acquired test sample image, and a step (S115) of performing the anomaly detection based on the acquired ReConPatch feature.

Specifically, the computing system 1000 according to an embodiment of the present disclosure may acquire the feature map, based on the pretrained model (S101).

In detail, in an embodiment, the computing system 1000 may acquire the feature map according to the image data set (hereinafter, a target image data set) for a predetermined anomaly detection target through the pretrained model (that is, the pretrained model) to perform concept learning.

Here, in other words, the pretrained model according to an embodiment may be an image deep-learning model pre-trained to perform the concept learning, based on a predetermined training data set (for example, a predetermined natural image data set and/or a predetermined normal image data set).

In other words, in an embodiment, the computing system 1000 may acquire the feature map based on the predetermined target image data set (that is, the image data set including a plurality of images for the predetermined anomaly detection target) in conjunction with the pretrained model as described above.

In detail, in an embodiment, the computing system 1000 may input a target image data set (for example, an image data set including a plurality of images of a predetermined electronic circuit element) to the pretrained model.

In this case, the pretrained model may output the feature map according to the input target image data set, and may provide the feature map to the computing system 1000.

Accordingly, the computing system 1000 may acquire the feature map according to the target image data set.

In addition, in an embodiment, the computing system 1000 may extract a plurality of patch features, based on the acquired feature map (S103).

Here, the patch feature according to the embodiment may mean a feature extracted from a patch representing a small portion of a predetermined image.

Specifically, the above-described patch may be a rectangular region representing a specific portion within the predetermined image. This patch may be regarded as a subset including some of information of the entire image, and may primarily include local information or texture information.

In addition, the above-described feature may be feature information extracted from the predetermined image or the patch, and may summarize or represent important attributes of the image (for example, patterns, textures, colors, and/or shapes).

Therefore, the above-described patch feature may be data representing local attributes within the predetermined image in units of the patch.

In detail, in an embodiment, the computing system 1000 may extract a plurality of patch features, based on the feature map acquired as described above.

More specifically, as an embodiment, the computing system 1000 may divide a target training image (hereinafter, referred to as a target training image) included in a target image data set into units of a predetermined patch size before inputting the target training image to the pretrained model described above.

The computing system 1000 may input each divided patch to the pretrained model to acquire the feature map corresponding to each patch.

In other words, the computing system 1000 may acquire the feature map for each patch by dividing the target training image into units of a predetermined patch size, and thereafter by inputting the divided image to the pretrained model.

In this case, according to an embodiment, the computing system 1000 may perform the coreset sampling on the feature map for each acquired patch.

Here, for reference, the coreset sampling may be one of methods for efficiently processing a large-scale data set, and may mean a process of extracting a set of representative samples that preserve statistical characteristics or structures of an original data set as much as possible while reducing a size of the data set.

As an embodiment, the computing system 1000 may perform the coreset sampling by using an approximate algorithm method for selecting some samples that may represent the entire data set while maintaining the characteristics of the original data set within a predetermined error range in view of the distribution of the given data.

Alternatively, the computing system 1000 may perform the coreset sampling by using an importance sampling method for assigning a sampling probability, based on importance of each given data point and preferentially selecting a data point having high importance.

Accordingly, the computing system 1000 may acquire a plurality of patch features on which the coreset sampling is performed.

Meanwhile, in another embodiment, the computing system 1000 may acquire the feature map for the entire region of the target training image (hereinafter, an entire feature map).

The computing system 1000 may divide the acquired entire feature map into units of a predetermined patch size.

Accordingly, the computing system 1000 may extract the plurality of patch features from the target training image.

In this way, in an embodiment, the computing system 1000 may extract the plurality of patch features according to the target training image by using at least one of the above-described methods.

In this case, according to an embodiment, the computing system 1000 may extract each patch feature by aggregating surrounding feature vectors within a specific patch size.

Alternatively, depending on an embodiment, the computing system 1000 may use a pixel value itself within each patch, as a feature.

Alternatively, depending on an embodiment, the computing system 1000 may use a statistical summary (for example, a mean, a variance, and/or a histogram) of the pixel value within each patch, as a feature.

Alternatively, depending on an embodiment, the computing system 1000 may analyze a texture pattern within each patch, and may use the texture pattern as a feature. For example, the computing system 1000 may extract a texture-based patch feature by using techniques of Gabor filters, Local Binary Patterns (LBP), and/or Histogram of Oriented Gradients (HOG).

Alternatively, depending on an embodiment, the computing system 1000 may automatically learn and extract a high-dimensional feature within each patch by using a deep-learning algorithm such as a convolutional neural network (CNN), and may use the high-dimensional feature as a feature.

In this way, in an embodiment, the computing system 1000 may extract a feature in a patch level, and may support the anomaly detection using the extracted feature. In this manner, the computing system 1000 may improve processing efficiency in a process of data learning and analysis, and may more minutely detect an abnormal local pattern that mainly appears in a small portion within the image.

In addition, in an embodiment, the computing system 1000 may perform feature representation learning, based on the plurality of extracted patch features (S105).

Here, in other words, the feature representation learning may mean a process in which the deep-learning model (in the embodiment, the anomaly detection model (ODM)) automatically detects and learns a useful feature from given data.

In detail, in an embodiment, the computing system 1000 may learn the feature representation for the plurality of patch features extracted as above, based on the anomaly detection model (ODM) according to an embodiment of the present disclosure.

That is, the computing system 1000 may perform the feature representation learning for the anomaly detection model (ODM) that performs the anomaly detection, based on the plurality of patch features extracted above.

Here, in other words, the anomaly detection may mean a process of identifying abnormal patterns, anomalies, and/or exceptions from specific data, that is, a process of detecting components that deviate from attributes of normal data.

Therefore, in an embodiment, based on the plurality of patch features described above, the computing system 1000 may perform the feature representation learning (in an embodiment, concept learning or the like) to determine whether a predetermined input image includes a specific abnormal attribute and to classify and/or recognize the image in accordance with a determination result.

In this case, the computing system 1000 in an embodiment may perform the feature representation learning described above, based on a semi-supervised learning method.

In other words, the computing system 1000 may build the anomaly detection model (ODM) that implements semi-supervised anomaly detection.

Here, for reference, the semi-supervised learning may mean a deep-learning method for training a model by using not only data having a label (that is, supervised data) but also data having no label (that is, unsupervised data).

In general, when basic data for building an anomaly detection system is collected, it is difficult to acquire a sufficient amount of abnormal data (in an embodiment, image data obtained by imaging an abnormal state of the anomaly detection target) for smooth learning. Accordingly, there may be limitations in the anomaly detection learning that aims to highly accurately recognize abnormal states (anomalies) of various shapes.

Therefore, an embodiment of the present disclosure intends to implement the semi-supervised anomaly detection that builds the pretrained model (that is, the pretrained model) by mainly using normal data (for example, image data obtained by imaging the normal state of the anomaly detection target) and that performs the anomaly detection based on a pseudo label by using the pretrained model.

Here, for reference, the pseudo label may mean a label predicted by a model trained on data having no label.

This pseudo label may be mainly used when data having a designated label is limited or when model training is performed by additionally using a large amount of data having no label.

Through this configuration, the computing system 1000 may easily achieve model learning and performance improvement for building an anomaly detection process even when the data having the designated label is relatively rare or is diverse and limited.

More specifically, in an embodiment, the computing system 1000 may perform the feature representation learning according to the plurality of patch features, based on the first network TN and the second network SN of the anomaly detection model (ODM).

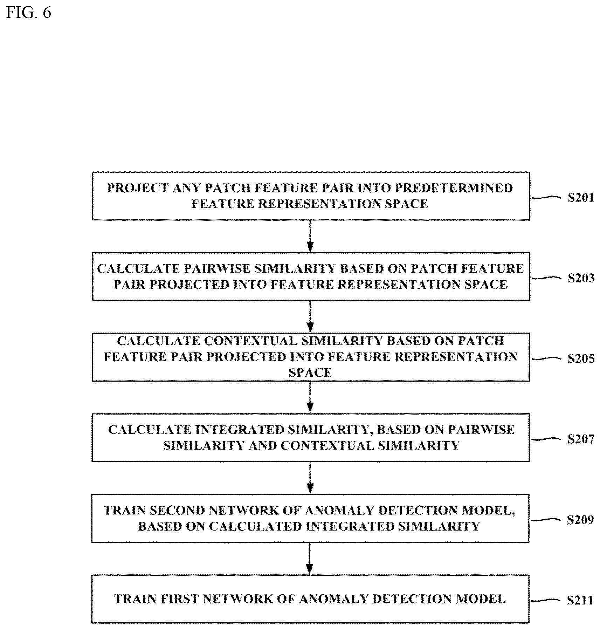

FIG. 6 is a flowchart for describing a feature representation learning method based on the patch feature according to one embodiment of the present disclosure.

Specifically, referring to FIG. 6, in an embodiment, the computing system 1000 may project any patch feature pair (patch feature pair) into a predetermined feature representation space (S201).

In detail, in an embodiment, the computing system 1000 may project the patch feature pair (hereinafter, referred to as a first patch feature pair) including any pair of a first patch feature $p_i$ and a second patch feature $p_j$ into the feature representation space.

As an embodiment, the computing system 1000 may represent the first patch feature $p_i$ projected into the feature representation space as expressed in [Mathematical Formula 1(a)] below, and may represent the second patch feature $p_j$ projected into the feature representation space as expressed in [Mathematical Formula 1(b)] below.

[Mathematical Formula 1(a)]

$$\overline{z_i} = \overline{g}(\overline{f}(\overline{p_i}))$$

[Mathematical Formula 1(b)]

$$\overline{z_j} = \overline{g}(\overline{f}(\overline{p_j}))$$

In addition, in an embodiment, the computing system 1000 may calculate pairwise similarity based on the patch feature pair projected into the feature representation space (S203).

Here, the pairwise similarity according to the embodiment may mean data obtained by measuring the similarity between the first patch feature $p_i$ and the second patch feature $p_j$ which are included in any patch feature pair.

That is, in the embodiment, the computing system 1000 may measure the pairwise similarity representing the similarity between the first patch feature $p_i$ and the second patch feature $p_j$ which are included in the first patch feature pair.

In this case, as an embodiment, the computing system 1000 may calculate the above-described pairwise similarity according to [Mathematical Formula 2] below.

[Mathematical Formula 2]

$$Pairwise_{ij} = e^{-\left\| z_i - z_j \right\|_2^2 / \sigma}$$

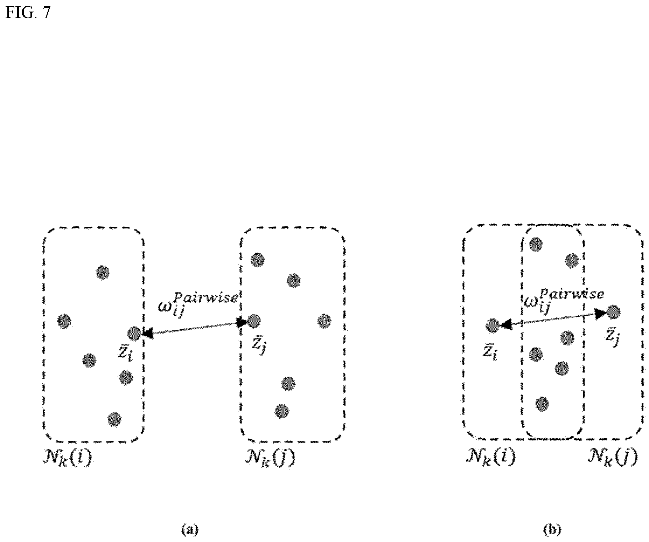

FIG. 7 is an example of a diagram illustrating an example of measuring the similarity between the patch features according to one embodiment of the present disclosure.

However, referring to FIG. 7, when the similarity is measured only for a relationship between the first patch feature $p_i$ and the second patch feature $p_j$ which are included in any patch feature pair, the pairwise similarity is the same. However, discrimination accuracy may be degraded when the first feature and the second feature need to be classified as different labels as in (a) of FIG. 7 (that is, as both are further separated from each other, both are closer to a correct label) and when the first feature and the second feature need to be classified as the same label as in (b) of FIG. 7 (that is, as both are closer to each other, both are closer to the correct label).

In other words, when only the pairwise similarity is measured, the accuracy may be degraded since the label is predicted without considering mutual similarity in a group relationship including the K-number of nearest neighbors ($N_k(i)$) for the first patch feature $p_i$ and the K-number of nearest neighbors ($N_k(j)$) for the second patch feature $p_j$.

Accordingly, in an embodiment, the computing system 1000 may calculate contextual similarity based on the patch feature pair projected into the feature representation space (S205).

Here, the contextual similarity according to the embodiment may mean data obtained by measuring bidirectional similarity between the K-number of nearest neighbors ($N_k(i)$) for the first patch feature $p_i$ and the K-number of nearest neighbors ($N_k(j)$) for the second patch feature $p_j$ which are included in any patch feature pair.

In this case, the bidirectional similarity in the embodiment may be calculated based on average similarity between the K-number of features of the nearest neighbors ($N_k(i)$) for the first patch feature $p_i$ and the K-number of features of the nearest neighbors ($N_k(j)$) for the second patch feature $p_j$.

In detail, in an embodiment, the computing system 1000 may calculate the above-described contextual similarity according to a K-Nearest Neighbors (K-NN) algorithm that performs prediction, based on a distance between data points as in [Mathematical Formula 3] below, and [Mathematical Formula 4].

[Mathematical Formula 3]

$$\tilde{z}_{ij}^{Contextual} = \begin{cases} \dfrac{|N_k(i) \cap N_k(j)|}{|N_k(i)|}, & \text{if } j \in N_k(i) \\ 0, & \text{otherwise} \end{cases}$$

[Mathematical Formula 4]

$$R_k(i) = \{j \mid j \in N_k(i) \text{ and } i \in N_k(j)\}$$

$$\widehat{w}_{ij}^{Contextual} = \frac{1}{|R_{\frac{k}{2}}(i)|} \sum_{i \in R_{\frac{k}{2}}(i)} \widetilde{w}_{ij}^{Contextual}$$

That is, in an embodiment, the computing system 1000 may calculate the contextual similarity in which the contextual similarity is considered to be higher as the first patch feature $p_i$ and the second patch feature $p_j$ which are included in the first patch feature pair share a larger number of nearest neighbors in common.

In this way, the computing system 1000 may learn the feature representation in a group relationship including the first patch feature $p_i$ and the second patch feature $p_j$, and may reflect the feature representation in a pseudo label prediction process.

That is, the computing system 1000 may extract the K-number of the nearest feature samples of the first patch feature $p_i$ and the second patch feature $p_j$, may calculate the contextual similarity that measures how many samples intersect with each other, and may use the contextual similarity together with the pairwise similarity to train the anomaly detection model (ODM). In this manner, the computing system 1000 may enable the trained anomaly detection model (ODM) to extract better quality features.

Accordingly, the computing system 1000 may more accurately determine when the pairwise similarity between the first feature and the second feature is the same, but the first feature and the second feature need to be classified as different labels (that is, when both are closer to the correct label as both have to be further separated from each other) and when the first feature and the second feature need to be classified as the same label (that is, when both are closer to the correct label as both have to be closer to each other), and may reflect this determination in the pseudo label prediction. Therefore, the computing system 1000 may directly improve task processing quality and performance of the anomaly detection model (ODM) that performs the semi-supervised anomaly detection.

Referring back to the embodiment, the computing system 1000 may calculate integrated similarity, based on the pairwise similarity and the contextual similarity which are calculated as described above (S207).

Here, the integrated similarity according to the embodiment may mean data obtained by combining the pairwise similarity and the contextual similarity between the first patch feature $p_i$ and the second patch feature $p_j$ which are included in any patch feature pair.

In detail, in an embodiment, the computing system 1000 may linearly combine the pairwise similarity and the contextual similarity between the first patch feature $p_i$ and the second patch feature $p_j$ which are included in the first patch feature pair according to [Mathematical Formula 5] below.

[Mathematical Formula 5]

$$w_{ij}^{Contextual} = \frac{1}{2}\left( \widehat{w}_{ij}^{Contextual} + \widehat{w}_{ji}^{Contextual} \right).$$

$$w_{ij} = \alpha \cdot w_{ij}^{Pairwise} + (1-\alpha) \cdot w_{ij}^{Contextual}.$$

In this case, the integrated similarity according to the embodiment may be defined as a linear combination of two similarities satisfying $\alpha \in [0,1]$.

In addition, in the embodiment, the computing system 1000 may train the second network SN of the anomaly detection model (ODM), based on the calculated integrated similarity (S209).

That is, in the embodiment, the computing system 1000 may train second network SN to implement the feature representation learning by using the integrated similarity.

In detail, in the embodiment, the computing system 1000 may train the second network SN by applying the integrated similarity calculated for the first patch feature pair to a relaxation contrast loss $L_{RC}$.

Here, the relaxation contrast loss $L_{RC}$ according to the embodiment is as expressed in [Mathematical Formula 6] below.

[Mathematical Formula 6]

$$L_{RC}(z) = \frac{1}{N}\sum_{i-1}^{N}\sum_{j-1}^{N} w_{ij}(\delta_{ij})^2 + \frac{1}{N}\sum_{i-1}^{N}\sum_{j-1}^{N}(1-w_{ij})\max(m-\delta_{ij},0)^2$$

Here, 'z' in [Mathematical Formula 6] may be an embedding vector inferred by ' $g(f(p))$ ', 'N' may be the number of mini-batch, that is, the number of patch instances, 'm' may be a repelling margin, and ' $w_{ij}$ ' may be a parameter for determining the weight of attraction and repelling loss terms.

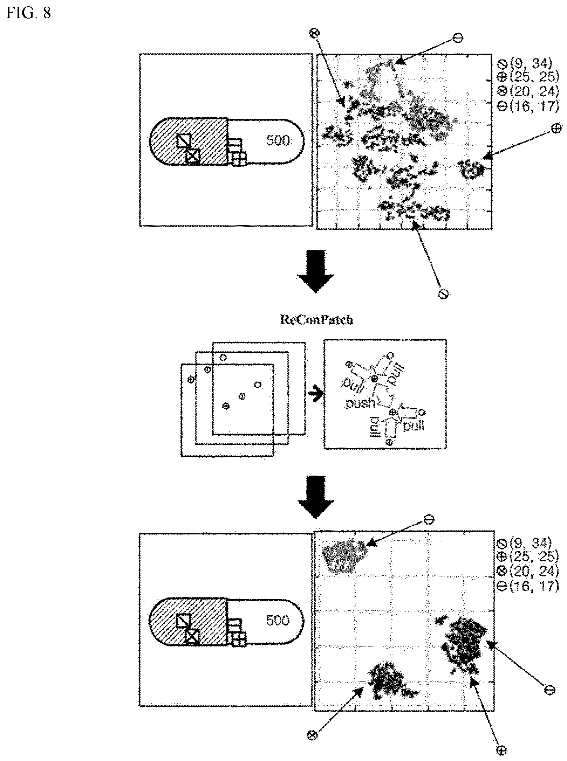

FIG. 8 is an example of a diagram illustrating an application example of a ReConPatch Process according to one embodiment of the present disclosure.

In this case, referring to FIG. 8, in the embodiment, when the computing system 1000 determines through the integrated similarity that the first patch feature $p_i$ and the second patch feature $p_j$ are the patch feature pair (hereinafter, referred to as a positive feature pair) needed to be classified into mutually different labels, the computing system 1000 may train the second feature representation layer ($f(\cdot)$, embedding function) of the second network SN to map the first patch feature $p_i$ and the second patch feature $p_j$ which are included in the positive feature pair while both of these are separated from each other in the feature representation space.

On the other hand, in the embodiment, when the computing system 1000 determines through the integrated similarity that the first patch feature $p_i$ and the second patch feature $p_j$ are the patch feature pair (hereinafter, referred to as a voice feature pair) needed to be classified into mutually the same label, the computing system 1000 may train the second feature representation layer ($f(\cdot)$, embedding function) of the second network SN to map the first patch feature $p_i$ and the second patch feature $p_j$ which are included in the voice feature pair while both of these are closer to each other in the feature representation space.

In this way, the computing system 1000 in the embodiment may train the second feature representation layer $p_j$ to reduce a variance of the similar patch features and to increase a difference in heterogeneous patch features.

That is, the computing system 1000 may train the second feature representation layer $f(\cdot)$ to extract any patch feature in a form closer to the correct pseudo label.

In this way, in the embodiment, the computing system 1000 may train the second feature representation layer $f(\cdot)$ to more accurately extract a meaningful feature from any patch feature. In this manner, the computing system 1000 may directly improve the feature representation performance itself of the anomaly detection model (ODM), and may improve processing quality of various tasks (in the embodiment, the anomaly detection or the like) based on the improved feature representation performance.

In addition, the computing system 1000 that trains the second network SN based on the integrated similarity in the embodiment, 6) may train the first network TN of the anomaly detection model (ODM).

In detail, in the embodiment, the computing system 1000 may gradually distill data according to a parameter $\theta_{f,g}$

of the second network SN into data according to a parameter $\theta_{f,g}$ of the first network TN by using an exponential moving average (EMA) method according to [Mathematical Formula 7] below.

[Mathematical Formula 7]

$$\theta_{\overline{f,g}} \leftarrow \gamma \bullet \theta_{\overline{f,g}} + (1-\gamma) \bullet \theta_{f,g}$$

That is, in the embodiment, the computing system 1000 may train the first network TN of the anomaly detection model (ODM) by gradually distilling information learned in the second network SN into the first network TN according to [Mathematical Formula 7] described above.

In this case, in the embodiment, the computing system 1000 may train the first network TN described above by further applying an update rate control variable which is a variable that controls a rate of information distillation.

Accordingly, in the embodiment, the computing system 1000 may implement the feature representation learning based on the plurality of patch features based on the first network TN and the second network SN of the anomaly detection model (ODM).

In this way, in the embodiment, the computing system 1000 may perform a process (in the embodiment, the ReConPatch process) of building a discriminant feature for the anomaly detection by distilling main features of the data set for the anomaly detection target into the pretrained model, based on the semi-supervised learning as described above.

Accordingly, the computing system 1000 may build a high-performance anomaly detection model (ODM) trained to more accurately classify the corresponding feature into the correct pseudo label in a predetermined patch level.

Therefore, the computing system 1000 may directly and effectively improve the processing performance and quality of various tasks (in the embodiment, the anomaly detection or the like) using the anomaly detection model (ODM).

Referring back to FIG. 5, in the embodiment, the computing system 1000 may acquire the ReConPatch feature according to the performed feature representation learning (S107).

Here, the ReConPatch feature according to the embodiment may mean the patch feature output through the feature representation layer (hereinafter, referred to as a ReConPatch layer) on which the feature representation learning described above is performed.

That is, in the embodiment, the ReConPatch feature may be the patch feature output based on the second feature representation layer $f(\cdot)$ of the second network SN on which the feature representation learning is performed.

In detail, in the embodiment, the computing system 1000 may acquire the ReConPatch feature for each target training image included in the above-described target image data set in conjunction with the ReConPatch layer.

In other words, in the embodiment, the computing system 1000 may acquire ae ReConPatch feature data set (hereinafter, referred to as a ReConPatch learning data set) in a form of reducing the variance of the similar patch features and increasing the difference in the heterogeneous patch features for the plurality of patch features extracted from each target training image.

In addition, in the embodiment, the computing system 1000 may perform the coreset sampling, based on the acquired ReConPatch feature (S109).

Here, in other words, the coreset sampling according to the embodiment may be one of methods for efficiently processing a large-scale data set, and may mean a process of extracting a set of representative samples that preserve statistical characteristics or structures of the original data set as much as possible while reducing the size of the data set.

In detail, as an embodiment, the computing system 1000 may perform the coreset sampling by using an approximate algorithm method for selecting some samples that may represent all of the ReConPatch learning data sets while maintaining characteristics of the original ReConPatch learning data set within a predetermined error range by considering the distribution of the acquired ReConPatch learning data sets.

In another embodiment, the computing system 1000 may perform the coreset sampling by using an importance sampling method for assigning a sampling probability, based on importance of each acquired ReConPatch feature data and preferentially selecting a data point having high importance.

Accordingly, the computing system 1000 may acquire a ReConPatch learning data set (hereinafter, referred to as a ReConPatch sampling data set) on which the coreset sampling is performed.

In addition, in the embodiment, the computing system 1000 may store and manage the acquired ReConPatch sampling data set on a predetermined database.

Through this configuration, the computing system 1000 may highly accurately detect the anomaly while reducing data processing costs.

In addition, in the embodiment, the computing system 1000 may acquire a test sample image (S111).

Here, the test sample image according to the embodiment may mean an image for detecting whether or not the anomaly is present, that is, image data obtained by imaging the anomaly detection target.

In detail, in the embodiment, the computing system 1000 may acquire the test sample image as described above, based on a predetermined user input and/or conjunction with an external server.

In addition, in the embodiment, the computing system 1000 may acquire the ReConPatch feature according to the acquired test sample image (S113).

In the following description, any repeated content may be summarized or omitted.

In detail, in the embodiment, the computing system 1000 may input the acquired test sample image to the pretrained model.

In addition, in the embodiment, the computing system 1000 may acquire the feature map for the test sample image from the pretrained model to which the test sample image is input. Detailed description thereof refers to the description of Step S101 described above.

In addition, in the embodiment, the computing system 1000 may extract the plurality of patch features, based on the acquired feature map. Detailed description thereof refers to the description of Step S103 described above.

In addition, in the embodiment, the computing system 1000 may input the plurality of extracted patch features to the ReConPatch layer described above.

In this case, the ReConPatch layer can output the plurality of ReConPatch features according to the plurality of input patch features.

Accordingly, in the embodiment, the computing system 1000 may acquire a ReConPatch feature data set (hereinafter, referred to as a ReConPatch target data set) in a form of reducing the variance of the similar patch features and increasing the difference in the heterogeneous patch features for the plurality of input patch features.

In addition, in the embodiment, the computing system 1000 may perform the anomaly detection based on the acquired ReConPatch feature (S115).

That is, in the embodiment, the computing system 1000 may perform the anomaly detection on the test sample image, based on the ReConPatch sampling data set acquired based on each training image used for learning and the ReConPatch target data set acquired based on the test sample image.

In other words, in the embodiment, the computing system 1000 may perform the anomaly detection on the test sample image, based on the ReConPatch sampling data set and the ReConPatch target data set.

In detail, in the embodiment, the computing system 1000 may calculate similarity (hereinafter, referred to as anomaly detection similarity) between at least a portion of the ReConPatch sampling data set stored in the database and the ReConPatch target data set.

In addition, in the embodiment, the computing system 1000 may generate an anomaly score map, based on the calculated anomaly detection similarity.

Here, for reference, the anomaly score map may mean an indicator that indicates how much the anomaly deviates from a determined normal state, based on a value (score) assigned by the model.

In addition, in the embodiment, as the score according to the generated anomaly score map is higher, the computing system 1000 may determine that the test sample image is closer to an abnormal state, and as the score according to the generated anomaly score map is lower, the computing system 1000 may determine that the test sample image is closer to a normal state.

Accordingly, in the embodiment, the computing system 1000 may perform the anomaly detection on the test sample image.

As described above, in the embodiment of the present disclosure, the computing system 1000 may perform a process (in the embodiment, the ReConPatch process) of building the discriminant feature for the anomaly detection by distilling the main features of the data set for the anomaly detection target into the pretrained model, based on the semi-supervised learning as described above, and may perform the anomaly detection using the anomaly detection model (ODM) learned through this ReConPatch process.

Accordingly, in the embodiment, the computing system 1000 may directly and significantly improve the anomaly detection performance and quality based on the anomaly detection model (ODM) according to an embodiment of the present disclosure.

As described above, the patch feature learning method and the patch feature learning system for anomaly detection according to an embodiment of the present disclosure may perform the patch feature-based learning on the predetermined pretrained model, based on the image data set for the anomaly detection target. In this manner, there is an advantageous effect of performing more efficient data processing and providing the anomaly detection model (ODM) that further improves the task processing performance and quality for the anomaly detection.

In addition, the patch feature learning method and the patch feature learning system for anomaly detection according to an embodiment of the present disclosure performs the patch feature-based learning to reduce the variance of the mutually similar patch features and to increase the difference in the mutually heterogeneous patch features. In this manner, there is an advantageous effect of improving accuracy and efficiency of the anomaly detection even in a limited learning environment and enhancing the task processing performance accordingly.

Meanwhile, the embodiments according to the present disclosure described above may be implemented in a form of a program command that may be executed through various computer components, and may be recorded on a computer-readable recording medium. The computer-readable recording medium may include a program command, a data file, a data structure alone or in combination with each other. The program command recorded on the computer-readable recording medium may be specially designed and configured for the present disclosure, or may be known and available to those skilled in the art in a field of computer software. Examples of the computer-readable recording medium include magnetic media such as hard disks, floppy disks, and magnetic tapes, optical recording media such as CD-ROMs and DVDs, magneto-optical media such as floptical disks, and hardware devices specially configured to store and execute the program command, such as a ROM, a RAM, and a flash memory. Examples of the program command include not only machine language codes such as those generated by a compiler, but also high-level language codes that may be executed through a computer by using an interpreter or the like. The hardware device may be changed with one or more software modules to perform processing according to the present disclosure, and vice versa.

The specific implementation examples described in the present disclosure are exemplary embodiments, and do not limit the scope of the present disclosure in any way. For brief description of the specification, description of electronic components, control systems, software, and other functional aspects of the systems in the related art may be omitted. In addition, line connections or connection members between components illustrated in the drawings merely represent functional connections and/or physical or circuit connections as examples. The line connections or the connection members may be replaced, or may be represented as various additional functional connections, physical connections, or circuit connections in actual devices. In addition, unless specifically stated as "essential" or "important", an element may not be absolutely required for the application of the present disclosure.

In addition, although the present disclosure has been described with reference to preferred embodiments of the present disclosure, it will be understood by those skilled in the art or having ordinary knowledge in the art that the present disclosure may be corrected and modified in various ways within the scope that does not depart from the concept and the technical idea of the present disclosure as set forth in the appended claims. Therefore, the technical scope of the present disclosure should not be limited to the contents described in the detailed description of the specification, but should be defined by the appended claims.

Forms for embodying the present disclosure are the same as best forms for embodying the present disclosure described above.

[Industrial Applicability]

The present disclosure relates to a patch feature learning method and a patch feature learning system for anomaly detection, and may be used in an artificial intelligence industry. Therefore, the present disclosure has industrial applicability.

**Claims**

1.  A patch feature learning method for anomaly detection by using a computing system including a memory and a processor, the method comprising:

    a step of acquiring a feature map according to a first image data set;
    a step of acquiring a plurality of patch features based on local data within a predetermined image, based on the acquired feature map;
    a step of performing feature representation learning, based on the plurality of acquired patch features;
    a step of acquiring a ReConPatch feature based on the performed feature representation learning; and
    a step of performing anomaly detection, based on the acquired ReConPatch feature,
    wherein the ReConPatch feature is data obtained by reconstructing a feature representation corresponding to the plurality of patch features in accordance with similarity calculated based on the plurality of patch features.

2.  The patch feature learning method for anomaly detection of claim 1, wherein the patch feature is a feature extracted from a patch that specifies at least a partial region within the predetermined image.

3.  The patch feature learning method for anomaly detection of claim 2, wherein the step of acquiring the plurality of patch features includes any one step from a step of acquiring a plurality of patches according to a predetermined patch size, based on a first image included in the first image data set and extracting a feature for each of the plurality of acquired patches, and a step of extracting a feature for the entire first image included in the first image data set and dividing all of the extracted features into a predetermined patch size.

4.  The patch feature learning method for anomaly detection of claim 1, wherein the step of performing the feature representation learning based on the plurality of patch features includes a step of performing semi-supervised concept learning.

5. The patch feature learning method for anomaly detection of claim 4, wherein the step of performing the feature representation learning based on the plurality of patch features includes a step of performing the learning, based on a first network, which is a neural network for calculating similarity between predetermined features, and a second network, which is a neural network for realizing feature representation learning.

6. The patch feature learning method for anomaly detection of claim 5, wherein the first network and the second network each include a feature representation layer, which is a layer for reconstructing feature representation according to a predetermined feature, and a space projection layer, which is a layer for projecting feature representation according to a predetermined feature into a feature representation space.

7. The patch feature learning method for anomaly detection of claim 6, wherein the step of performing the feature representation learning based on the plurality of patch features further includes a step of gradually distilling data according to a parameter of the second network into data according to a parameter of the first network, based on an exponential moving average algorithm.

8. The patch feature learning method for anomaly detection of claim 7, wherein the step of performing the feature representation learning based on the plurality of patch features further includes a step of projecting a first patch feature pair including a predetermined first patch feature and a predetermined second patch feature into the feature representation space, and a step of calculating pairwise similarity, which is data obtained by measuring similarity between the first patch feature and the second patch feature, based on the first patch feature pair projected into the feature representation space.

9. The patch feature learning method for anomaly detection of claim 8, wherein the step of performing the feature representation learning based on the plurality of patch features further includes a step of calculating contextual similarity, which is data obtained by measuring bidirectional similarity between the K-number of nearest neighbors for the first patch feature and the K-number of nearest neighbors for the second patch feature, based on the first patch feature pair projected into the feature representation space.

10. The patch feature learning method for anomaly detection of claim 9, wherein the step of performing the feature representation learning based on the plurality of patch features further includes a step of calculating integrated similarity, which is data obtained by linearly combining the calculated pairwise similarity and the contextual similarity.

11. The patch feature learning method for anomaly detection of claim 10, wherein the step of performing the feature representation learning based on the plurality of patch features further includes a step of training the second network, based on the calculated integrated similarity.

12. The patch feature learning method for anomaly detection of claim 11, wherein the step of training the second network, based on the integrated similarity, includes a step of training the second feature representation layer for mapping the first patch feature and the second patch feature to be separated or closer to each other on the feature representation space according to the integrated similarity.

13. The patch feature learning method for anomaly detection of claim 1, wherein the step of performing the anomaly detection includes a step of acquiring a first test sample image, a step of acquiring the ReConPatch feature according to the acquired first test sample image, and a step of performing the anomaly detection, based on the ReConPatch feature according to the feature representation learning and the ReConPatch feature according to the first test sample image.

14. The patch feature learning method for anomaly detection of claim 13, wherein the step of performing the anomaly detection further includes: a step of generating an anomaly score map based on the similarity between the ReConPatch feature according to the feature representation learning and the ReConPatch feature according to the first test sample image; and a step of performing the anomaly detection based on the generated anomaly score map.

15. The patch feature learning method for anomaly detection of claim 13, further comprising:

a step of performing coreset sampling on the ReConPatch feature according to the feature representation learning; and

a step of performing the anomaly detection, based on the ReConPatch feature on which the coreset sampling is performed.

16. A patch feature learning system for anomaly detection, the system comprising:

at least one the memory; and

at least one processor for reading out at least one application stored in the memory to perform patch feature learning for the anomaly detection,

wherein the processor acquires a feature map according to ae first image data set, acquires a plurality of patch features based on local data within a predetermined image, based on the acquired feature map, performs feature representation learning, based on the plurality of acquired patch features, acquires a ReConPatch feature, which is data obtained by reconstructing feature representation according to the plurality of patch features, in accordance with similarity calculated based on the plurality of patch features, in accordance with the performed feature representation learning, and performs the anomaly detection, based on the acquired ReConPatch feature.

17. A computing device comprising:

at least one the memory; and

at least one processor for reading out at least one application stored in the memory to perform patch feature learning for anomaly detection,

wherein commands of the processor include commands for executing a step of acquiring a feature map according to a first image data set, a step of acquiring a plurality of patch features based on local data within a predetermined image, based on the acquired feature map, a step of performing feature representation learning, based on the plurality of acquired patch features, a step of acquiring a ReConPatch feature, which is data obtained by reconstructing feature representation according to the plurality of patch features in accordance with similarity calculated based on the plurality of patch features, in accordance with the performed feature representation learning, and a step of performing anomaly detection, based on the acquired ReConPatch feature.

FIG. 1

FIG. 2

**100**

FIG. 3

200

Computing device

Central Intelligence Layer

| Application 1 | ⟷ | Model 1 |

| Application 2 | ⟷ | Model 2 |

| Application 3 | ⟷ | Model 3 |

⋮                    ⋮

| Application N | ⟷ | Model N |

Central device data layer

Sensor(s)

Context manager

Device state

Additional component(s)

FIG. 4

FIG. 5

| ACQUIRE FEATURE MAP, BASED ON PRETRAINED MODEL | — S101 |

↓

| EXTRACT PLURALITY OF PATCH FEATURES, BASED ON ACQUIRED FEATURE MAP | — S103 |

↓

| PERFORM FEATURE REPRESENTATION LEARNING, BASED ON PLURALITY OF EXTRACTED PATCH FEATURES | — S105 |

↓

| ACQUIRE RECONPATCH FEATURE ACCORDING TO PERFORMED FEATURE REPRESENTATION LEARNING | — S107 |

↓

| PERFORM CORESET SAMPLING, BASED ON ACQUIRED RECONPATCH FEATURE | — S109 |

↓

| ACQUIRE TEST SAMPLE IMAGE | — S111 |

↓

| ACQUIRE RECONPATCH FEATURE ACCORDING TO ACQUIRED TEST SAMPLE IMAGE | — S113 |

↓

| PERFORM ANOMALY DETECTION BASED ON ACQUIRED RECONPATCH FEATURE | — S115 |

FIG. 6

PROJECT ANY PATCH FEATURE PAIR INTO PREDETERMINED FEATURE REPRESENTATION SPACE — S201

CALCULATE PAIRWISE SIMILARITY BASED ON PATCH FEATURE PAIR PROJECTED INTO FEATURE REPRESENTATION SPACE — S203

CALCULATE CONTEXTUAL SIMILARITY BASED ON PATCH FEATURE PAIR PROJECTED INTO FEATURE REPRESENTATION SPACE — S205

CALCULATE INTEGRATED SIMILARITY, BASED ON PAIRWISE SIMILARITY AND CONTEXTUAL SIMILARITY — S207

TRAIN SECOND NETWORK OF ANOMALY DETECTION MODEL, BASED ON CALCULATED INTEGRATED SIMILARITY — S209

TRAIN FIRST NETWORK OF ANOMALY DETECTION MODEL — S211

FIG. 7

$$\omega_{ij}^{Pairwise}$$

$\bar{z}_i$     $\bar{z}_j$

$\mathcal{N}_k(i)$     $\mathcal{N}_k(j)$

(a)

$$\omega_{ij}^{Pairwise}$$

$\bar{z}_i$     $\bar{z}_j$

$\mathcal{N}_k(i)$     $\mathcal{N}_k(j)$

(b)

FIG. 8

## INTERNATIONAL SEARCH REPORT

| | International application No. |
|---|---|
| | **PCT/KR2024/003119** |

| A. | CLASSIFICATION OF SUBJECT MATTER |
|---|---|

**G06N 3/0895**(2023.01)i; **G06N 3/0464**(2023.01)i; **G06N 3/08**(2006.01)i; **G06N 3/094**(2023.01)i; **G06N 3/0475**(2023.01)i; **G06T 7/00**(2006.01)i

According to International Patent Classification (IPC) or to both national classification and IPC

| B. | FIELDS SEARCHED |
|---|---|

Minimum documentation searched (classification system followed by classification symbols)

G06N 3/0895(2023.01); G06T 7/00(2006.01); G06T 7/11(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 어노말리 디텍션(anomaly detection), 특징맵(feature map), 패치 피처(patch feature), 특징 표현 학습(feature representation learning), 리컨패치 피처(ReConPatch feature)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | TSAI, Chin-Chia et al. Multi-Scale Patch-Based Representation Learning for Image Anomaly Detection and Segmentation. 2022 IEEE/CVF Winter Conference on Applications of Computer Vision (WACV). 15 February 2022.<br>See pages 3066-3068; and figure 2. | 1-4,13-17<br>5-12 |
| Y | YUN, Sukmin et al. Patch-level Representation Learning for Self-supervised Vision Transformers. 2022 IEEE/CVF Conference on Computer Vision and Pattern Recognition (CVPR). 27 September 2022.<br>See pages 8345 and 8347. | 1-4,13-17 |
| Y | KIM, Donghyeong et al. FAPM: FAST ADAPTIVE PATCH MEMORY FOR REAL-TIME INDUSTRIAL ANOMALY DETECTION. arXiv:2211.07381v1. November 2022.<br>[Retrieved on 30 May 2024]. Retrieved from <https://arxiv.org/pdf/2211.07381v1>.<br>See sections 2.2-2.3; and figure 2. | 15 |
| A | CN 111316317 A (NANTOMICS, LLC) 19 June 2020 (2020-06-19)<br>See claim 1. | 1-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 June 2024** | **12 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/003119**

| C. | DOCUMENTS CONSIDERED TO BE RELEVANT | |
|---|---|---|
| Category* | Citation of document, with indication, where appropriate, of the relevant passages | Relevant to claim No. |
| A | JP 2023-030355 A (SEIKO EPSON CORP.) 08 March 2023 (2023-03-08)<br>    See paragraphs [0014]-[0020]. | 1-17 |
| PX | HYUN, Jeeho et al. ReConPatch : Contrastive Patch Representation Learning for Industrial Anomaly Detection. arXiv:2305.16713v3. January 2024.<br>    [Retrieved on 30 May 2024]. Retrieved from <https://arxiv.org/pdf/2305.16713v3>.<br>    See entire document. | 1-17 |

Form PCT/ISA/210 (second sheet) (July 2022)

**INTERNATIONAL SEARCH REPORT**
Information on patent family members

| International application No. |
| --- |
| **PCT/KR2024/003119** |

| Patent document cited in search report | | | Publication date (day/month/year) | Patent family member(s) | | | Publication date (day/month/year) |
| --- | --- | --- | --- | --- | --- | --- | --- |
| CN | 111316317 | A | 19 June 2020 | AU | 2017-345812 | A1 | 09 May 2019 |
| | | | | AU | 2017-345812 | B2 | 05 December 2019 |
| | | | | AU | 2018-332879 | A1 | 27 February 2020 |
| | | | | CA | 3040518 | A1 | 26 April 2018 |
| | | | | CA | 3072108 | A1 | 21 March 2019 |
| | | | | CN | 110073404 | A | 30 July 2019 |
| | | | | CN | 110073404 | B | 21 March 2023 |
| | | | | CN | 111316317 | B | 10 November 2023 |
| | | | | CN | 117115548 | A | 24 November 2023 |
| | | | | EP | 3513378 | A1 | 24 July 2019 |
| | | | | EP | 3513378 | B1 | 17 February 2021 |
| | | | | EP | 3682419 | A1 | 22 July 2020 |
| | | | | JP | 2020-504349 | A | 06 February 2020 |
| | | | | JP | 2020-533725 | A | 19 November 2020 |
| | | | | JP | 6955004 | B2 | 27 October 2021 |
| | | | | JP | 7061671 | B2 | 28 April 2022 |
| | | | | KR | 10-2019-0068607 | A | 18 June 2019 |
| | | | | KR | 10-2020-0035129 | A | 01 April 2020 |
| | | | | KR | 10-2222796 | B1 | 03 March 2021 |
| | | | | KR | 10-2382401 | B1 | 01 April 2022 |
| | | | | SG | 11202000842 | A | 27 February 2020 |
| | | | | US | 10607343 | B2 | 31 March 2020 |
| | | | | US | 10769788 | B2 | 08 September 2020 |
| | | | | US | 11682195 | B2 | 20 June 2023 |
| | | | | US | 2018-0114317 | A1 | 26 April 2018 |
| | | | | US | 2019-0080453 | A1 | 14 March 2019 |
| | | | | US | 2020-0151875 | A1 | 14 May 2020 |
| | | | | US | 2023-0129222 | A1 | 27 April 2023 |
| | | | | WO | 2018-076023 | A1 | 26 April 2018 |
| | | | | WO | 2019-055555 | A1 | 21 March 2019 |
| JP | 2023-030355 | A | 08 March 2023 | None | | | |

Form PCT/ISA/210 (patent family annex) (July 2022)